# FASCICULE DE BREVET EUROPEEN

(11) **EP 1 668 648 B1**
(45) Date de publication et mention de la délivrance du brevet: **19.05.2010**
(21) Numéro de dépôt: 04787428.4
(22) Date de dépôt: 23.09.2004
(51) Int. Cl.: G21C 3/32

(54) **ASSEMBLAGE DE COMBUSTIBLE NUCLEAIRE COMPRENANT UN DISPOSITIF INTERIEUR DE RENFORT**
KERNBRENNSTABBÜNDEL MIT EINER FÜR DESSEN VERSTEIFUNG BESTIMMTEN INNENVORRICHTUNG
NUCLEAR FUEL ASSEMBLY COMPRISING AN INTERNAL REINFORCEMENT DEVICE

(30) Priorité: 30.09.2003 FR 0311461
(43) Date de publication de la demande: 14.06.2006
(73) Titulaire: Areva NP, 92400 Courbevoie (FR)
(72) Inventeur: GENTET, Guy, F-69003 Lyon (FR); BEATI, Angelo, F-69003 Lyon (FR); GAUTHIER, Jacques, F-69270 Cailloux-sur-Fontaines (FR)
(74) Mandataire: Domenego, Bertrand
(86) Numéro de dépôt international: PCT/FR2004/002401
(87) Numéro de publication internationale: WO 2005/034137

(56) Documents cités:
- EP-A- 0 261 544
- EP-A- 0 516 542
- FR-A- 2 665 291
- US-A- 4 666 664
- "Fuel cartridge, for PWR reactor, has reinforcing part extending between support plates" DERWENT, 9 novembre 2001 (2001-11-09), XP002284687
- PATENT ABSTRACTS OF JAPAN vol. 0174, no. 61 (P-1598), 23 août 1993 (1993-08-23) & JP 05 107377 A (TOSHIBA CORP), 27 avril 1993 (1993-04-27)

## Description

La présente invention concerne les assemblages de combustible nucléaire.

Elle s'applique, par exemple, aux assemblages pour réacteurs nucléaires à eau sous pression.

Généralement, les assemblages de combustible nucléaire comprennent des crayons de combustible nucléaire et un squelette de support ayant deux embouts, des tubes guides reliant les embouts, et des grilles de maintien des crayons.

Les grilles de maintien comprennent chacune deux jeux de plaquettes entrecroisées et une ceinture extérieure, délimitant ainsi des cellules traversées les unes par les tubes guides et les autres par les crayons de combustible. Les plaquettes sont munies de moyens de maintien des crayons aux noeuds d'un réseau sensiblement régulier et sont fixées à certains au moins des tubes guides.

L'une au moins des grilles de maintien assure de plus le supportage des crayons. Pour cela, elle est habituellement munie de ressorts, découpés dans les plaquettes ou rapportés sur les plaquettes, et destinés à plaquer les crayons sur des bossettes embouties dans les plaquettes et formant d'autres faces des cellules.

Les autres grilles n'ont qu'une fonction de maintien des crayons aux noeuds du réseau. Elles comportent pour cela, sur chaque face de chaque cellule traversée par un crayon, des bossettes d'appui du crayon.

On connaît également de FR-2 665 291 des grilles additionnelles de mélange destinées à être intercalées entre les grilles de maintien et comprenant des ailettes pour améliorer le mélange du fluide réfrigérant circulant aux travers des assemblages.

EP-261 544 décrit également une grille de mélange. Cette grille est dépcurvue de ceinture périphérique mais elle a une étendue transversale supérieure à celle du réseau de crayons de combustible nucléaire, notamment pour pouvoir les engager.

SE-2001/03 730 décrit un squelette d'assemblage de combustible nucléaire muni d'une pièce de renfort.

A l'issue de leur fabrication, les assemblages s'étendent de manière rectiligne et verticalement le long d'une direction dénommée axiale. Une fois placés en réacteur, ces assemblages se déforment du fait de l'irradiation et peuvent atteindre des formes en C, S ou W.

De telles déformations posent de nombreux problèmes. En fonctionnement, elles rendent plus difficile l'insertion des grappes de commande et d'arrêt dans les tubes guides.

En manutention, ces déformations augmentent les risques d'accrochage entre les assemblages, par exemple lors des opérations de chargement et de déchargement du coeur du réacteur.

Un but de l'invention est de résoudre ce problème en limitant la déformation des assemblages de combustible nucléaire sous irradiation.

A cet effet, l'invention a pour objet un assemblage de combustible nucléaire selon la revendication 1.

Selon des modes particuliers de réalisation, l'assemblage peut comprendre l'une ou plusieurs des caractéristiques des revendications 2 à 14.

L'invention sera mieux comprise à la lecture de la description qui va suivre, donnée uniquement à titre d'exemple, et faite en se référant aux dessins annexés, sur lesquels :
- la figure 1 est une vue schématique en élévation d'un assemblage de combustible nucléaire selon un premier mode de réalisation de l'invention,
- la figure 2 est une vue schématique partielle et en perspective illustrant un dispositif intermédiaire de renfort de l'assemblage de la figure 1,
- la figure 3 est une vue schématique en plan comparant la structure et l'étendue du dispositif intermédiaire de renfort de la figure 2 par rapport au réseau de crayons de combustible nucléaire et à une grille de maintien de l'assemblage de la figure 1,
- la figure 4 est une vue schématique partielle et en coupe illustrant la liaison aux tubes guides d'une variante du dispositif intermédiaire de renfort de la figure 2,
- la figure 5 est un graphique comparant la rigidité d'un assemblage classique et de l'assemblage de la figure 1, avant irradiation,
- la figure 6 est une vue analogue à la figure 5, après irradiation,
- la figure 7 est une vue analogue à la figure 3 illustrant une variante du dispositif intermédiaire de renfort de la figure 2,
- la figure 8 est une vue schématique en élévation d'un assemblage de combustible nucléaire selon un deuxième mode de réalisation de l'invention, deux rangées de crayons ayant été omises pour rendre visibles des dispositifs intermédiaires de renfort,
- la figure 9 est une vue analogue à la figure 3 illustrant un dispositif intermédiaire de renfort de l'assemblage de la figure 8,
- la figure 10 est une vue analogue à la figure 8 illustrant une variante du deuxième mode de réalisation de l'invention,
- la figure 11 est un graphique comparant la rigidité d'un assemblage classique et des assemblages des figures 8 et 10, après irradiation,
- la figure 12 est une vue analogue à la figure 3 illustrant un troisième mode de réalisation de l'invention, et
- la figure 13 est une vue analogue à la figure 12 illustrant une variante du troisième mode de réalisation de l'invention.

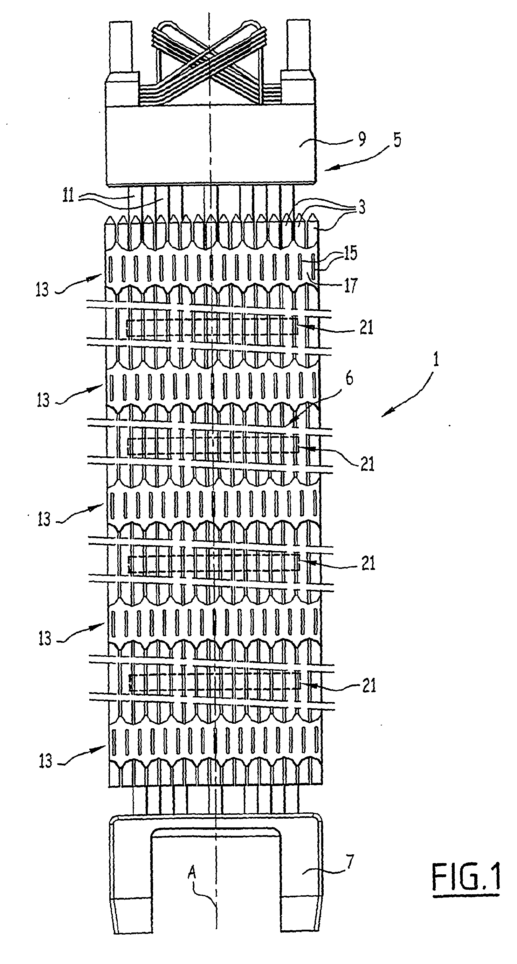

La figure 1 illustre schématiquement un assemblage 1 de combustible nucléaire pour réacteur à eau sous pression. L'assemblage 1 s'étend verticalement et de manière rectiligne le long d'une direction longitudinale A.

L'assemblage 1 comprend principalement des crayons 3 de combustible nucléaire et une structure ou squelette 5 de support des crayons 3.

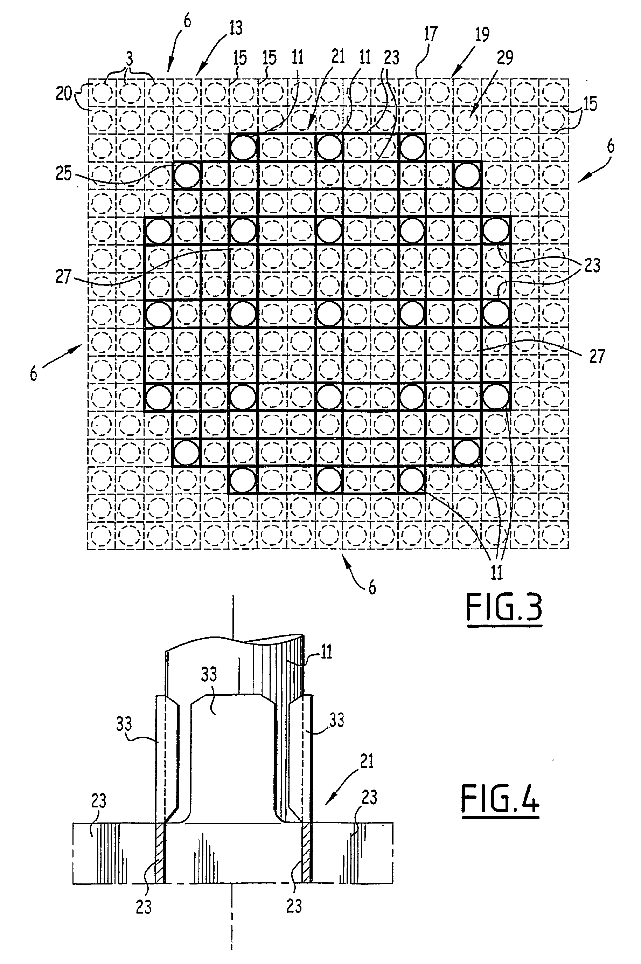

De manière classique, les crayons 3 s'étendent verticalement et sont disposés en un réseau sensiblement régulier à base carrée, comme on le voit sur la figure 3 où les crayons 3 sont représentés en pointillés.

Dans l'exemple représenté, l'assemblage 1 comprend un groupe de 264 crayons 3 et le réseau forme, en vue de dessus, un carré de 17 crayons de côté. Le groupe de crayons 3 possède donc quatre faces latérales 6 de 17 crayons chacune.

Le squelette de support 5 comprend classiquement:
- un embout inférieur 7 et un embout supérieur 9,
- des tubes guides 11 destinés à recevoir les crayons d'une grappe de commande ou d'arrêt non-représentée, et
- des grilles 13 de maintien des crayons 3 aux noeuds du réseau.

Les embouts 7 et 9 sont fixés aux extrémités longitudinales des tubes guides 11.

Comme on peut le voir sur la figure 3 où une grille de maintien 13 est représentée en pointillés, chaque grille de maintien 13 comprend par exemple deux jeux de plaquettes 15 entrecroisées et une ceinture périphérique 17 entourant la couche périphérique 19 des crayons 3.

La grille 13 délimite des cellules 20 dont la plupart reçoivent chacune un crayon 3. Des bossages non-représentés sont prévus dans les plaquettes 15 pour fournir des appuis aux crayons 3 et les maintenir aux noeuds du réseau. Les autres cellules 20 reçoivent chacune un tube guide 11.

De manière classique également, les grilles de maintien 13 sont fixées aux tubes guides 11 et réparties sur la hauteur des crayons 3.

La retenue axiale des crayons 3 peut être assurée par une seule grille de maintien 13, par exemple la grille 13 supérieure, munie dans ce but de ressorts de poussée des crayons 3 contre des bossettes, découpées dans ses plaquettes 15 ou rapportées sur celles-ci.

Selon l'invention, l'assemblage 1 comprend, entre les grilles de maintien 13, des dispositifs intermédiaires 21 de renfort du squelette 5.

Pour les raisons exposées par la suite, ces dispositifs de renfort 21 ne sont pas visibles depuis l'extérieur de l'assemblage 1 et ont donc été représentées en pointillés sur la figure 1.

Dans l'exemple représenté, un dispositif intermédiaire de renfort 21 est prévu entre chaque paire de grilles de maintien 13.

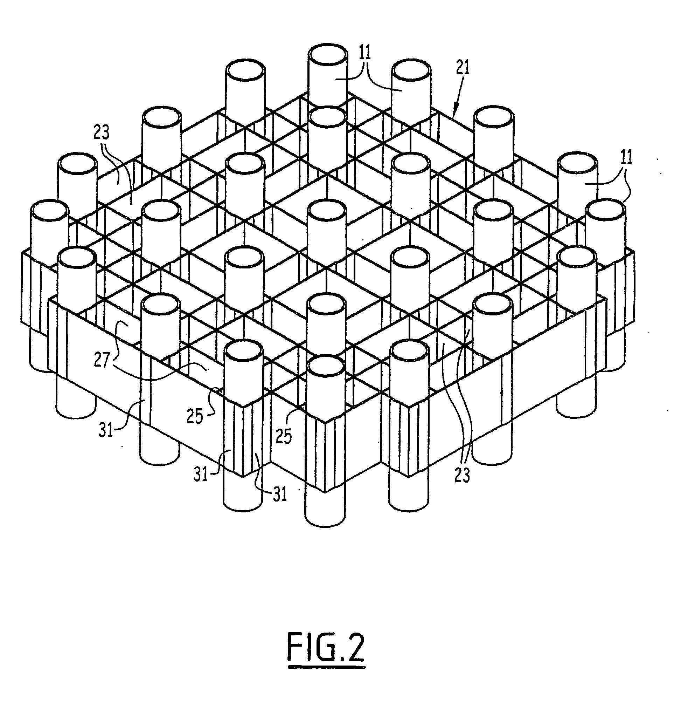

La structure des dispositifs intermédiaires de renfort 21 étant analogue, un seul dispositif 21 sera décrit en se référant aux figures 2 et 3. On notera que seuls des tronçons des tubes guides 11 ont été représentés sur la figure 2. Sur la figure 3, les tubes guides 11 et le dispositif intermédiaire de renfort 21 ont été représentés en trait fort.

Le dispositif 21 comprend deux jeux de plaquettes 23 entrecroisées et fixées les unes aux autres, par exemple par soudage à leurs points d'intersection. Les plaquettes 23 ont par exemple une épaisseur de l'ordre de 0,425mm et une hauteur comprise entre environ 18 et 28mm. Elles sont réalisées de préférence en alliage de zirconium.

Les plaquettes 23 délimitent entre elles des cellules 25 recevant chacune un tube guide 11 et des cellules 27 de réception des crayons 3. Comme on le voit sur la figure 3, certaines des cellules 27 sont des cellules individuelles et ne reçoivent qu'un crayon 3, tandis que d'autres reçoivent deux ou quatre crayons 3.

Les plaquettes 23 du dispositif intermédiaire de renfort 21 forment une structure maillée s'étendant uniquement entre les tubes guides 11. Cette structure maillée est donc aérée.

Ainsi, l'étendue transversale des plaquettes 23, et donc du dispositif de renfort 21, est limitée. Les plaquettes 23 ne s'étendent en particulier pas entre les crayons 3 de la couche périphérique extérieure 19 de crayons 3 ni entre cette couche 19 et la couche immédiatement adjacente 29 qui comprend, dans l'exemple représenté, 15 crayons par côté. En fait, le dispositif intermédiaire de renfort 21 s'arrête au voisinage de cette couche 29.

Les plaquettes 23 sont dépourvues de moyens de maintien des crayons 3 et les cellules 27 ont donc des dimensions supérieures à celles des crayons 3 et les entourent avec un jeu.

De plus, le dispositif intermédiaire de renfort 21 est dépourvu de moyens de mélange du fluide réfrigérant s'écoulant au travers de l'assemblage combustible 1, tels que des ailettes.

Le dispositif intermédiaire de renfort 21 est fixé aux tubes guides 11, par exemple par soudage de zones 31 (fig.2) légèrement bombées des plaquettes 23. Un tel soudage peut être pratiqué en haut et/ou en bas des plaquettes 23.

Dans une variante illustrée par la figure 4, les plaquettes 23 peuvent être soudées aux tubes guides 11 grâce à des pattes de soudage 33 qui font saillie par rapport aux plaquettes 23, par exemple vers le haut.

Si l'assemblage 1 comprend un tube d'instrumentation à la place du tube guide 11 central, les dispositifs intermédiaires de renfort 21 peuvent y être soudés.

Grâce à la présence des dispositifs intermédiaires de renfort 21, le squelette de support 5 et donc l'assemblage 1 sont plus rigides.

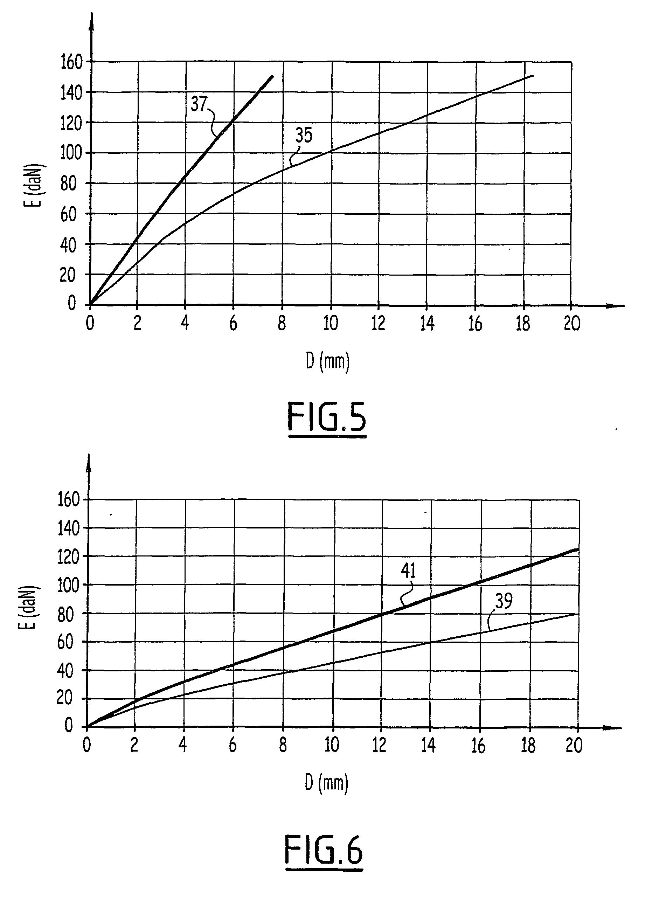

Cela est confirmé par la figure 5 qui illustre le résultat de simulations de déformations latérales d'assemblages de combustible nucléaire avant irradiation. Sur cette figure le déplacement latéral D en mm est porté en abscisse et l'effort nécessaire E en daN pour obtenir cette déformation est porté en ordonnée.

La courbe 35 correspond à un assemblage selon l'état de la technique issu de fabrication, c'est à dire avant irradiation. La courbe 37 correspond à l'assemblage 1 de la figure 1 issu de fabrication. Ainsi, la présence de dispositifs intermédiaires de renfort 21 permet d'augmenter la raideur ou rigidité latérale de l'assemblage 1 de l'ordre de 60% en début de vie par rapport à un assemblage classique.

La figure 6 correspond à des simulations analogues menées après irradiation. La courbe 39 correspond à un assemblage classique et la courbe 41 à l'assemblage 1 de la figure 1. L'augmentation de la rigidité latérale de l'assemblage 1 perdure donc après irradiation, cette augmentation étant toujours de l'ordre de 60%.

Ainsi, l'assemblage 1 a une raideur en fin de vie équivalente à celle d'un assemblage classique en début de vie. L'utilisation des dispositifs intermédiaires de renfort 21 pour renforcer le squelette de support 5 permet de compenser l'effet de l'irradiation.

En effet, on a découvert que la diminution de la rigidité après irradiation des assemblages classiques était due au fluage des tubes guides et aux modifications des conditions de support des crayons 3 par le squelette 5, si bien que les crayons 3 contribuaient à environ 65% de la rigidité d'un assemblage avant irradiation et ne contribuaient plus qu'à 40% environ de cette raideur après irradiation.

La rigidification du squelette de support 5 par les dispositifs intermédiaires de renfort 21 permet donc d'augmenter la raideur latérale y compris après irradiation. Pour autant, la structure aérée des dispositifs de renfort 21 qui en outre ont une étendue transversale réduite, limite les pertes de charge dans le fluide réfrigérant.

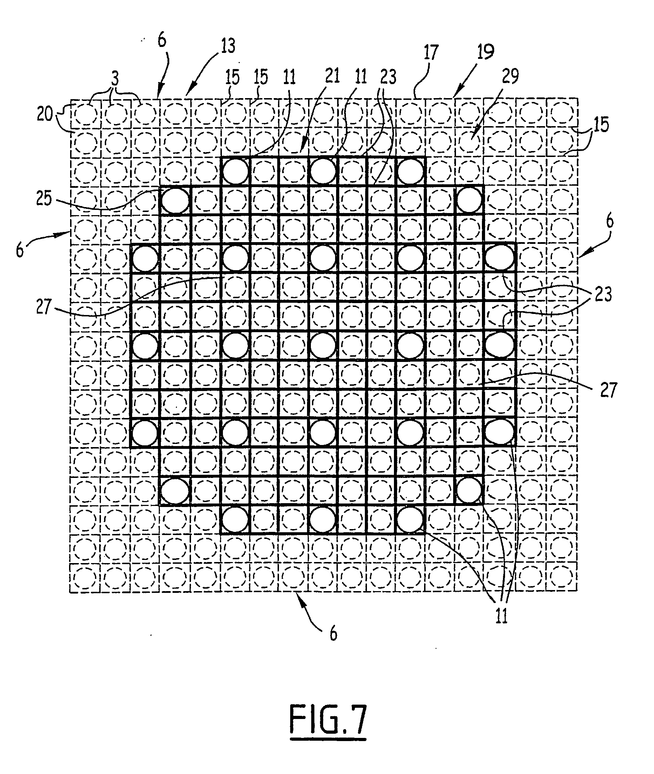

Selon une variante illustrée par la figure 7, le dispositif de renfort 21 peut former une structure maillée plus dense de sorte que toutes les cellules 27 sont des cellules individuelles ne recevant qu'un seul crayon 3.

Cette variante permet d'accroître encore la rigidité latérale de l'assemblage 1 mais augmente la perte de charge dans le fluide réfrigérant à la traversée de l'assemblage 1.

De manière générale, les dispositifs intermédiaires de renfort 21 peuvent être fixés par d'autres moyens que des soudures aux tubes guides, par exemple par dudgeonnage, manchonnage, etc...

De même, l'assemblage 1 ne comporte pas nécessairement un dispositif intermédiaire de renfort 21 entre chaque paire de grilles de maintien 13.

Dans certaines variantes, les dispositifs intermédiaires de renfort 21 peuvent en outre comprendre des moyens de maintien des crayons 3 et/ou des moyens de mélange du fluide réfrigérant s'écoulant au travers de l'assemblage 1.

Bien entendu, les dispositifs intermédiaires de renfort 21 peuvent être commercialisés seuls.

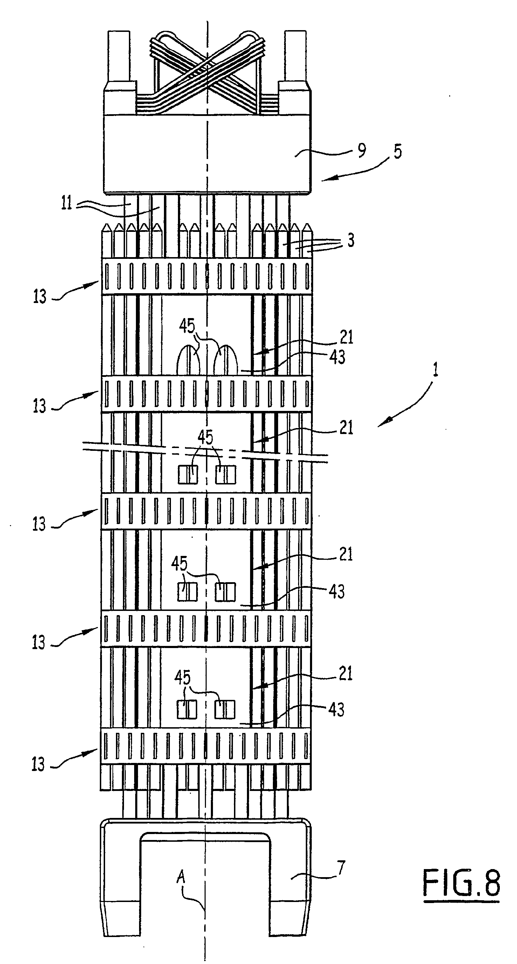

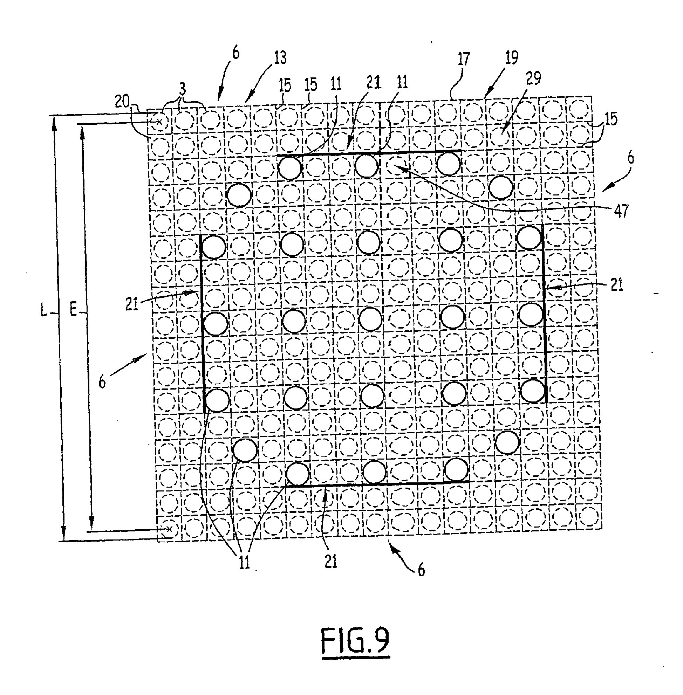

Les figures 8 et 9 illustrent un deuxième mode de réalisation de l'invention qui se distingue de celui décrit précédemment par ce qui suit.

Les dispositifs intermédiaires de renfort 21 sont formés par des plaques sensiblement planes. L'assemblage 1 comprend quatre plaques 21 entre chaque paire de grilles de maintien 13.

Chaque plaque 21 s'étend sensiblement sur toute la hauteur séparant les deux grilles de maintien 13 successives entre lesquelles elle est placée. La hauteur des plaques 21 peut ainsi être d'environ 480 mm.

L'extrémité inférieure 43 de chaque plaque 21 est munie d'ouvertures 45 de passage du fluide réfrigérant. Ces ouvertures 45 peuvent avoir des formes variées.

Ainsi, et comme illustré par la plaque 21 supérieure sur la figure 8, ces ouvertures 45 peuvent avoir des formes en parties d'ellipses. Ces ouvertures 45 peuvent également avoir des formes rectangulaires ou carrées comme illustré par les plaques 21 inférieures sur la figure 8.

Comme on le voit sur la figure 9, les plaques 21 sont disposées à l'intérieur du groupe de crayons 3. Plus précisément, les plaques 21 s'étendent entre la couche 29 de crayons 3 et la couche intérieurement adjacente 47 de crayons 3, qui comprend dans l'exemple représenté 10 crayons 3 et 3 tubes guides 11 par côté. Pour rendre visible des plaques 21 sur la figure 8, les deux rangées de crayons 3 situées en avant sur cette vue ont été omises.

Chaque plaque 21 s'étend sensiblement parallèlement à une face 6 respective du groupe de crayons 3 et est disposée sensiblement au centre de cette face 6. La plaque 21 est fixée, par exemple par des soudures, aux trois tubes guides 11 qui sont placés en regard de la face 6 considérée.

Dans l'exemple représenté, les plaques 21 s'étendent transversalement sur une longueur correspondant à 7 pas du réseau de crayons 3.

Les ouvertures 45 permettent au fluide réfrigérant de s'écouler transversalement au-dessus des grilles de maintien 13.

Ainsi, les plaques de renfort 21 ne s'opposent pas à un mélange efficace du fluide réfrigérant, produit par exemple par des ailettes de mélange prévues du côté aval, c'est-à-dire supérieur, des grilles de maintien 13.

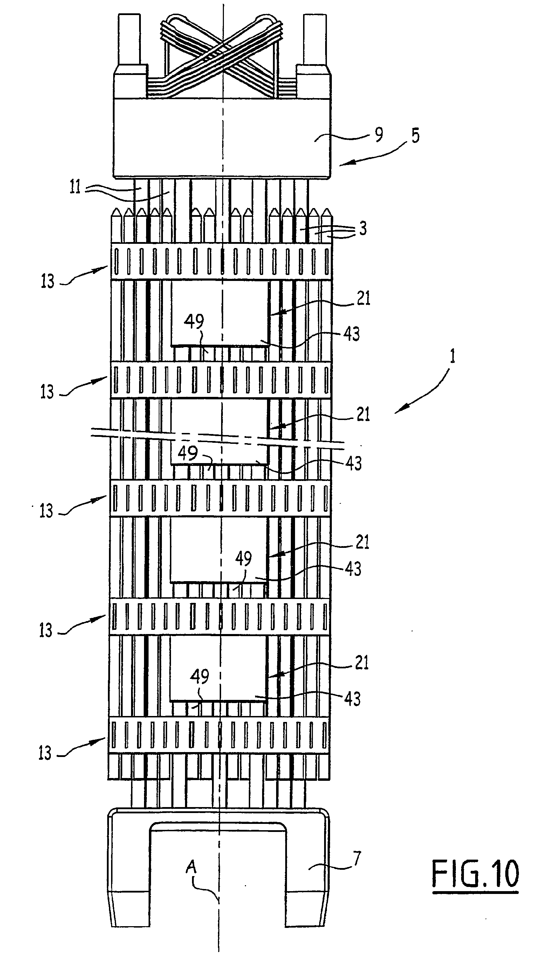

Dans une variante illustrée par la figure 10, l'extrémité inférieure 43 de chaque plaque 21 peut être espacée, par exemple de 15 cm, de la grille de maintien 13 immédiatement inférieure, c'est-à-dire située immédiatement sous la plaque 21 considérée.

Un passage 49 permettant au fluide réfrigérant de s'écouler transversalement est ainsi délimité entre chaque plaque 21 et la grille de maintien 13 immédiatement inférieure.

Ce deuxième mode de réalisation permet, comme le premier, d'accroître la raideur de l'assemblage 1, aussi bien en début de vie qu'en fin de vie.

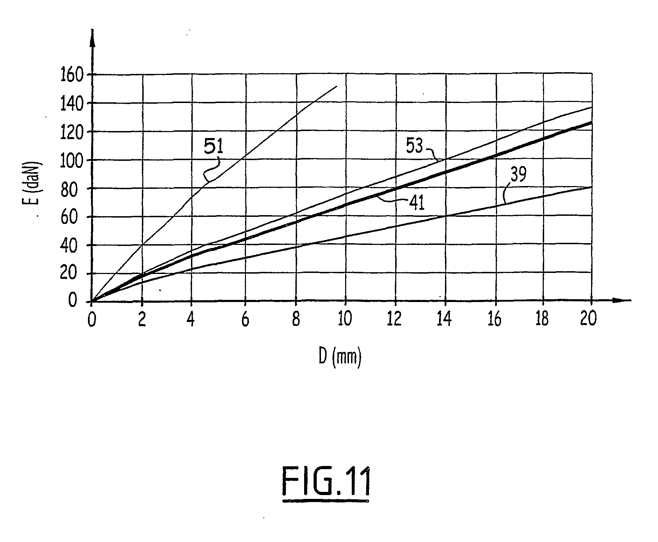

Cela est confirmé par la figure 11 qui reprend le graphique de la figure 6 sur lequel on a ajouté une courbe 51 correspondant à l'assemblage des figures 8 et 9 et une courbe 53 correspondant à la variante de la figure 10.

En outre, ce deuxième mode de réalisation induit des pertes de charge faibles dans le fluide réfrigérant.

En effet, chaque plaque de renfort 21 ne s'étend transversalement que dans une direction, et en outre son étendue transversale dans cette direction est réduite. En particulier, l'étendue transversale des plaques 21 est inférieure à l'étendue transversale E du réseau de crayons 3. Cette étendue E a été matérialisée sur la figure 9 et correspond à la distance entre deux noeuds opposés, c'est-à-dire entre les axes longitudinaux de deux crayons 3 opposés. Cette étendue E est donc inférieure à la largeur L du groupe de crayons 3 lui-même qui correspond à la distance entre les surfaces extérieures de deux crayons opposés 3.

On notera même que, dans ce mode de réalisation, l'étendue transversale des plaques 21 est inférieure à la moitié de l'étendue E.

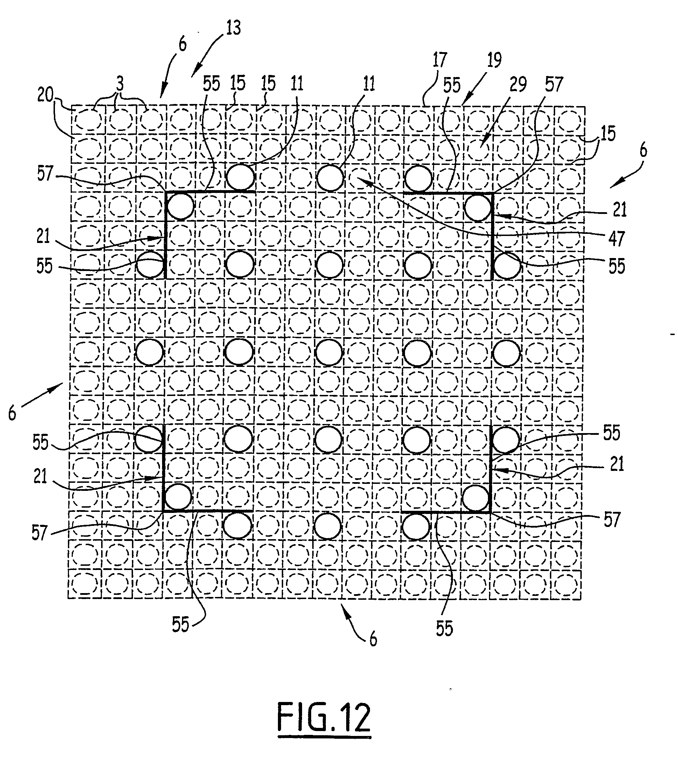

La figure 12 illustre un troisième mode de réalisation se distinguant du deuxième par ce qui suit.

Chaque dispositif de renfort 21 est formé par une cornière en forme de L comprenant deux branches 55 se rejoignant pour former un angle 57 sensiblement droit.

Les cornières 21, qui sont au nombre de quatre entre chaque paire de grilles de maintien 13, sont disposées dans les coins du groupe de crayons 3. Leurs angles 57 sont ouverts vers l'intérieur de l'assemblage.

Chaque cornière 21 est fixée à trois tubes guides 11. L'un de ces tubes guides 11 est disposé dans l'angle 57 et les deux autres tubes guides 11 sont disposés de l'autre côté de la cornière 21, aux extrémités des branches 55 opposées à l'angle 57.

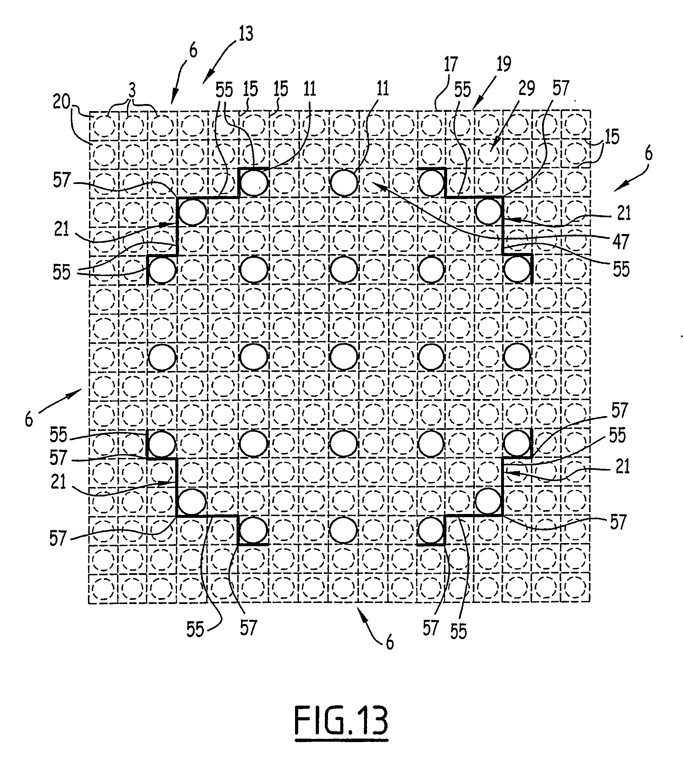

Dans la variante de la figure 13, chaque cornière 21 forme trois L et comprend donc six branches 55 se rejoignant pour former trois angles 57 ouverts vers l'intérieur de l'assemblage 1.

Les tubes guides 11 auxquels chaque cornière 21 est fixée sont disposés chacun dans un angle 57 respectif.

Ce troisième mode de réalisation permet également d'augmenter la rigidité de l'assemblage 1, aussi bien en début de vie qu'en fin de vie, tout en limitant les pertes de charge grâce à la faible étendue transversale des cornières 21 qui induisent une faible réduction du diamètre hydraulique.

Comme dans le deuxième mode de réalisation, des ouvertures 45 peuvent être ménagées dans les extrémités inférieures 43 des cornières 21, ou ces extrémités 43 peuvent être espacées des grilles de maintien 13 pour délimiter des passages 49 permettant au fluide réfrigérant de s'écouler transversalement.

Dans chacun des modes de réalisation décrits ci-dessus, les dispositifs 21 qui d'une part sont disposés à l'intérieur du groupe de crayons 3, et non pas à l'extérieur, et qui d'autre part ont une faible étendue transversale, permettent d'augmenter la rigidité de l'assemblage tout en limitant les pertes de charge induites par leur présence.

## Revendications

1. Assemblage (1) de combustible nucléaire, du type comprenant un groupe de crayons de combustible nucléaire (3) et un squelette de support (5) ayant :
- deux embouts (7, 9),
- des tubes guides (11) reliant les embouts, et
- des grilles (13) de maintien des crayons fixées aux tubes guides,
les crayons de combustible nucléaire (3) s'étendant le long d'une direction longitudinale (A) et étant disposés en un réseau sensiblement régulier,
l'assemblage comprenant au moins un dispositif (21) de renfort du squelette de support (5) disposé entre deux grilles de maintien (13) successives et fixé à des tubes guides (11), le dispositif de renfort (21) étant disposé à l'intérieur du groupe de crayons (3) et ayant une étendue transversale inférieure à celle (E) du réseau de crayons (3).

2. Assemblage selon la revendication 1, **caractérisé en ce que** le dispositif de renfort (21) ne s'étend pas dans la couche (19) de crayons (3) périphériques.

3. Assemblage selon la revendication 2, **caractérisé en ce que** le dispositif de renfort (21) ne s'étend pas entre la couche (19) de crayons périphériques et la couche adjacente (29) de crayons.

4. Assemblage selon l'une des revendications précédentes, **caractérisé en ce que** le dispositif de renfort (21) s'étend longitudinalement sensiblement jusqu'à la grille de maintien (13) immédiatement supérieure.

5. Assemblage selon l'une des revendications précédentes, **caractérisé en ce que** le dispositif de renfort (21) délimite, au-dessus de la grille de maintien (13) immédiatement inférieure, au moins un passage (45 ; 49) d'écoulement transversal d'un fluide réfrigérant destiné à s'écouler au travers de l'assemblage (1).

6. Assemblage selon la revendication 5, **caractérisé en ce que** le dispositif de renfort (21) s'étend longitudinalement sensiblement jusqu'à la grille de maintien (13) immédiatement inférieure, et **en ce que** le passage est formé par une ouverture (45) ménagée dans l'extrémité inférieure (43) du dispositif de renfort (21).

7. Assemblage selon la revendication 5, **caractérisé en ce que** l'extrémité inférieure (43) du dispositif de renfort (21) est disposée à distance de la grille de maintien (13) immédiatement inférieure pour délimiter le passage (49) d'écoulement transversal du fluide réfrigérant.

8. Assemblage selon l'une des revendications précédentes, **caractérisé en ce que** le dispositif de renfort (21) est fixé à au moins deux tubes guides (11).

9. Assemblage selon l'une des revendications précédentes, **caractérisé en ce que** le dispositif de renfort (21) est une plaque sensiblement plane.

10. Assemblage selon la revendication 9, **caractérisé en ce que** le dispositif de renfort (21) est sensiblement parallèle à une face (6) du groupe de crayons de combustible nucléaire (3).

11. Assemblage selon l'une des revendications 1 à 8, **caractérisé en ce que** le dispositif de renfort (21) est une cornière formant au moins un L.

12. Assemblage selon la revendication 11, **caractérisé en ce que** la cornière est disposée dans un coin du groupe de crayons de combustible nucléaire (3).

13. Assemblage selon l'une des revendications précédentes, **caractérisé en ce que** le dispositif de renfort (21) est dépourvu de moyens de mélange d'un fluide réfrigérant destiné à s'écouler au travers de l'assemblage.

14. Assemblage selon l'une des revendications précédentes, **caractérisé en ce que** le dispositif de renfort (21) est dépourvu de moyens de maintien des crayons de combustible nucléaire (3).

## Claims

1. Nuclear (1) fuel assembly, of the type comprising a group of nuclear fuel rods (3) and a support skeleton (5) having:
- two nozzles (7, 9),
- guide tubes (11) interconnecting the nozzles, and
- spacer grids (13) for holding the rods, secured to the guide tubes,
the nuclear fuel rods (3) extending along a longitudinal direction (A) and being disposed in a substantially regular array,
the assembly including at least one device (21) for reinforcing the support skeleton (5) disposed between two successive spacer grids (13) and secured to the guide tubes (11), the reinforcing device (21) being disposed inside the group of rods (3) and having a transverse extent less than the transverse extent (E) of the array of rods (3).

2. Assembly according to claim 1, **characterised in that** the reinforcing device (21) does not extend into the layer (19) of peripheral rods (3).

3. Assembly according to claim 2, **characterised in that** the reinforcing device (21) does not extend between the layer (19) of peripheral rods and the adjacent layer (29) of rods.

4. Assembly according to any one of the preceding claims, **characterised in that** the reinforcing device (21) extends longitudinally substantially as far as the spacer grid (13) immediately above.

5. Assembly according to any one of the preceding claims, **characterised in that** the reinforcing device (21) defines, above the spacer grid (13) immediately below, at least one transverse flow passage (45; 49) for a coolant fluid designed to flow through the assembly (1).

6. Assembly according to claim 5, **characterised in that** the reinforcing device (21) extends longitudinally substantially as far as the spacer grid (13) immediately below, and **in that** the passage is formed by an opening (45) formed in the bottom end (43) of the reinforcing device (21).

7. Assembly according to claim 5, **characterised in that** the bottom end (43) of the reinforcing device (21) is disposed at a distance from the spacer grid (13) immediately below so as to define the transverse flow passage (49) for the coolant fluid.

8. Assembly according to any one of the preceding claims, **characterised in that** the reinforcing device (21) is secured to at least two guide tubes (11).

9. Assembly according to any one of the preceding claims, **characterised in that** the reinforcing device (21) is a substantially planar plate.

10. Assembly according to claim 9, **characterised in that** the reinforcing device (21) is substantially parallel to a face (6) of the group of nuclear fuel rods (3).

11. Assembly according to any one of claims 1 to 8, **characterised in that** the reinforcing device (1) is an angle member forming at least one L-shape.

12. Assembly according to claim 11, **characterised in that** the angle member is disposed in a corner of the group of nuclear fuel rods (3).

13. Assembly according to any one of the preceding claims, **characterised in that** the reinforcing device (21) does not have means for mixing a coolant fluid designed to flow through the assembly.

14. Assembly according to any one of the preceding claims, **characterised in that** the reinforcing device (21) does not have means for holding the nuclear fuel rods (3).

## Patentansprüche

1. Kernbrennstoff-Anordnung (1) von dem Typ mit einer Gruppe von Kernbrennstäben (3) und einem Traggerüst (5), die folgendes aufweist:
- zwei Ansatzstücke (7, 9),
- Führungsrohre (11), welche die Ansatzstücke miteinander verbinden, und
- Gitter (13) zum Halten der an den Führungsrohren befestigten Brennstäbe,
wobei sich die Kernbrennstäbe (3) entlang einer Längsrichtung (A) erstrecken und in einem im wesentlichen regelmäßigen Raster angeordnet sind,
wobei die Anordnung mindestens eine Einrichtung (21) zum Versteifen des Traggerüstes (5) aufweist, die zwischen zwei aufeinander folgenden Haltegittern (13) angeordnet und an den Führungsrohren (11) befestigt ist, wobei die Versteifungseinrichtung (21) im Inneren der Gruppe von Brennstäben (3) angeordnet ist und in der Querrichtung eine Erstreckung aufweist, die geringer als diejenige (E) des Rasters von Kernbrennstäben (3) ist.

2. Anordnung nach Anspruch 1,
**dadurch gekennzeichnet,**
**daß** sich die Versteifungseinrichtung (21) nicht in die Lage (19) von peripheren Brennstäben (3) erstreckt.

3. Anordnung nach Anspruch 2,
**dadurch gekennzeichnet,**
**daß** sich die Versteifungseinrichtung (21) nicht zwischen die Lage (19) von peripheren Brennstäben und die benachbarte Lage (29) von Kernbrennstäben erstreckt.

4. Anordnung nach einem der vorherigen Ansprüche,
**dadurch gekennzeichnet,**
**daß** sich die Versteifungseinrichtung (21) in der Längsrichtung im wesentlichen bis zu dem unmittelbar darüberliegenden Haltegitter (13) erstreckt.

5. Anordnung nach einem der vorherigen Ansprüche,
**dadurch gekennzeichnet,**
**daß** die Versteifungseinrichtung (21) über dem unmittelbar darunter liegenden Haltegitter (13) mindestens eine quer verlaufende Strömungspassage (45; 49) für ein Kühlfluid begrenzt, das dazu bestimmt ist, die Anordnung (1) zu durchströmen.

6. Anordnung nach Anspruch 5,
**dadurch gekennzeichnet,**
**daß** sich die Versteifungseinrichtung (21) in der Längsrichtung im wesentlichen bis zu dem unmittelbar darunter liegenden Haltegitter (13) erstreckt, und daß die Passage durch eine im unteren Ende (43) der Versteifungseinrichtung (21) vorgesehene Öffnung (45) gebildet ist.

7. Anordnung nach Anspruch 5,
**dadurch gekennzeichnet,**
**daß** das untere Ende (43) der Versteifungseinrichtung (21) im Abstand von dem unmittelbar darunter liegenden Haltegitter (13) angeordnet ist, um die quer verlaufende Strömungspassage (49) für das Kühlfluid zu begrenzen.

8. Anordnung nach einem der vorherigen Ansprüche,
**dadurch gekennzeichnet,**
**daß** die Versteifungseinrichtung (21) an mindestens zwei Führungsrohren (11) befestigt ist.

9. Anordnung nach einem der vorherigen Ansprüche,
**dadurch gekennzeichnet,**
**daß** die Versteifungseinrichtung (21) eine im wesentlichen ebene Platte ist.

10. Anordnung nach Anspruch 9,
**dadurch gekennzeichnet,**
**daß** die Versteifungseinrichtung (21) im wesentlichen parallel zu einer Seite (6) der Gruppe von Kernbrennstäben (3) angeordnet ist.

11. Anordnung nach einem der Ansprüche 1 bis 8,
**dadurch gekennzeichnet,**
**daß** die Versteifungseinrichtung (21) ein Winkelprofil ist, das mindestens ein L bildet.

12. Anordnung nach Anspruch 11,
**dadurch gekennzeichnet,**
**daß** das Winkelprofil in einer Ecke der Gruppe von Kernbrennstäben (3) angeordnet ist.

13. Anordnung nach einem der vorherigen Ansprüche,
**dadurch gekennzeichnet,**
**daß** die Versteifungseinrichtung (21) keine Einrichtungen zum Mischen eines zum Durchströmen der Anordnung bestimmten Kühlfluids aufweist.

14. Anordnung nach einem der vorherigen Ansprüche,
**dadurch gekennzeichnet,**
**daß** die Versteifungseinrichtung (21) keine Einrichtungen zum Halten der Kernbrennstäbe (3) aufweist.
